Europäisches Patentamt

European Patent Office

Office européen des brevets

(19)

(11) Numéro de publication: **0 035 415**
**B1**

(12) **FASCICULE DE BREVET EUROPEEN**

(45) Date de publication du fascicule du brevet: **27.04.83**

(51) Int. Cl.³: **B 60 R 25/02**

(21) Numéro de dépôt: **81400074.1**

(22) Date de dépôt: **21.01.81**

(54) **Dispositif de blocage d'une colonne de direction de véhicule automobile.**

(30) Priorité: **04.03.80 FR 8004777**

(43) Date de publication de la demande:
**09.09.81 Bulletin 81/36**

(45) Mention de la délivrance du brevet:
**27.04.83 Bulletin 83/17**

(84) Etats contractants désignés:
**DE GB IT**

(56) Documents cités:
**FR - A - 2 161 392**
**FR - A - 2 362 038**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES
CITROEN**
**117 à 167, Quai André Citroen**
**F-75747 Paris Cedex 15 (FR)**

(72) Inventeur: **Edme, Georges**
**6 Rue des Paquerettes**
**F-25400 Audincourt (FR)**

(74) Mandataire: **Lavoix, Jean et al,**
**c/o Cabinet Lavoix 2, Place D'Estienne D'Orves**
**F-75441 Paris Cedex 09 (FR)**

Courier Press, Leamington Spa, England.

## Dispositif de blocage d'une colonne de direction de véhicule automobile

L'invention se rapporte à une dispositif de blocage d'un arbre de direction de véhicule automobile, ce dispositif constituant un antivol par immobilisation du volant.

Il est connu de fixer, sur un arbre de volant, une bague de verrou munie de saignées longitudinales dans l'une desquelles peut venir s'engager un pêne. Malheureusement, un tel dispositif n'est pas parfaitement sûr car il est possible, en excerçant un couple élevé sur le volant, de rompre, soit le support de l'anti-vol, soit le pêne, et de libérer l'arbre de direction, permettant ainsi le vol de la voiture.

C'est pourquoi on a déjà proposé notamment dans le brevet FR—A—2161392 des dispositifs autorisant la rotation de l'arbre de direction à partir d'un certain couple, inférieur à celui qui provoquerait la destruction du dispositif antivol, ce couple restant cependant suffisamment élevé pour interdire la conduite du véhicule. Tous ces dispositifs comportent cependant un ou plusieurs éléments qui doivent être solidarisés avec l'arbre de direction, généralement par soudure, ce qui constitue une opération relativement coûteuse en fabrication.

La présente invention vise à simplifier ces dispositifs en supprimant toute opération de solidarisation par soudure avec l'arbre de direction. Ceci doit permettre non seulement d'abaisser le prix de revient, mais aussi, du fait de la suppression de toute soudure sur l'arbre, de réaliser ce dernier sous forme de tube et/ou en alliage léger en procurant un gain de poids appréciable.

L'invention s'applique donc à un dispositif antivol pour véhicule automobile, comprenant un verrou dont un pêne peut venir en prise avec une bague entourant un arbre de direction auquel elle est reliée par des moyens à limitation de couple.

Ce dispositif antivol est caractérisé en ce que les moyens à limitation de couple comprennent deux surfaces coniques complémentaires formées sur l'arbre de direction et sur la bague, des moyens étant prévus pour exercer entre ces surfaces un effort axial prédéterminé.

Suivant une autre caractéristique, le cône selon lequel sont formées les surfaces coniques complémentaires est un "cône engageant", c'est-à-dire que, lorsque la bague a été serrée sur l'arbre, elle y reste engagée, la séparation ne pouvant se faire sans un effort extérieur. Pour cela, cette conicité est comprise, de préférence, entre 16 et 20% ce qui correspond à un angle au sommet compris entre 8 et 11° environ.

Deux exemples de réalisation de l'invention font l'objet de la description qui suit, en référence aux dessins joints dans lesquels:

— la Fig. 1 est une coupe axiale montrant un premier exemple de réalisation;

— la Fig. 2 est une coupe analogue pour une variante;

— la Fig. 3 représente un détail agrandi de la Fig. 2.

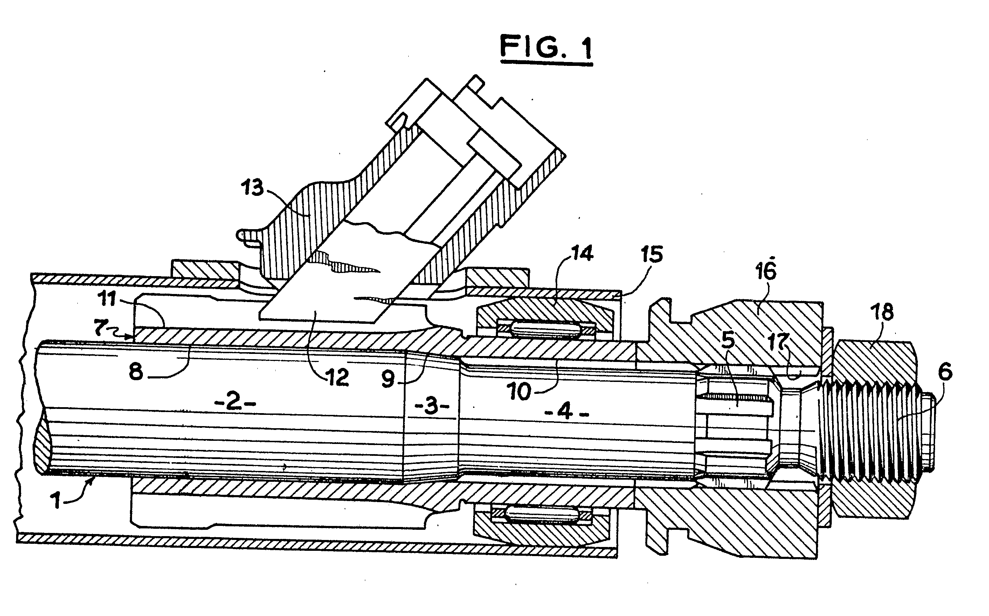

Sur la Fig. 1, on voit l'extrémité supérieure d'un arbre de direction 1 comprenant une partie cylindrique 2, une partie tronconique 3, une partie cylindrique 4, de diamètre plus faible, une partie cannelée 5 et une partie filetée 6.

Une bague 7 entoure l'arbre 1 et comporte un alésage central comprenant une partie cylindrique 8 ajustée librement sur la partie cylindrique 2 de l'arbre 1, une partie tronconique 9 qui coopère avec la partie tronconique 3 de l'arbre 1 et une partie cylindrique 10 qui présente un jeu radial par rapport à la partie cylindrique 4 de l'arbre 1.

Les parties tronconiques complémentaires 3 et 9 sont de préférence réalisées selon des cônes ayant un angle au sommet compris entre 8° et 11°, ayant par conséquent une conicité comprise entre 16 et 20% environ. Les deux cônes sont alors dits "engageants", c'est-à-dire qu'une fois serrés l'un dans l'autre, ils restent engagés et ne peuvent être séparés que sous l'effet d'une force axiale extérieure.

Extérieurement, la bague 7 comporte des saignées longitudinales 11 distinées à recevoir un pêne 12 coulissant sous la commande d'une clé, non représentée, dans un corps de verrou 13. La bague 7 tourillonne dans un roulement à aiguilles 14 emmanché dans un corps fixe de colonne de direction 15.

Un moyeu 16 de volant de direction, comportant un alésage cannelé 17 est emmanché sur la partie cannelée 5 de l'arbre 1. Un écrou 18 vissé sur la partie filetée 6 de l'arbre 1 assure le serrage du moyeu 16 sur la bague 7, et, par suite, le serrage l'une sur l'autre des surfaces coniques 9 et 3, respectivement de la bague 7 et de l'arbre 1. La force de serrage est contrôlée par l'emploi d'une clé dynamométrique et elle est choisie en fonction des caractéristiques souhaitées pour le limiteur de couple que constituent les portées 3 et 9.

On voit que, dans l'exemple décrit, aucune pièce du dispositif antivol n'est soudée sur l'arbre de direction, ce qui correspond bien à l'objectif que l'on s'était fixé.

La commande de direction est assurée de façon classique et en toute sécurité grâce à la liaison par cannelures entre le moyeu 16 du volant et l'arbre 1.

Le blocage du volant est assuré par l'introduction du pêne 12 dans l'une des saignées 11 de la bague 7. En cas de tentative de vol, le couple exercé sur la bague 7, à partir du volant de direction, est limité à la valeur nécessaire pour provoquer le glissement des surfaces coniques 3, 9 l'une sur l'autre. A ce couple limite correspond un effort sur le pêne insuffisant pour détruire l'antivol. L'effort exercé sur le volant pour faire tourner les roues n'en est pas moins assez grand pour interdire la conduite du véhicule.

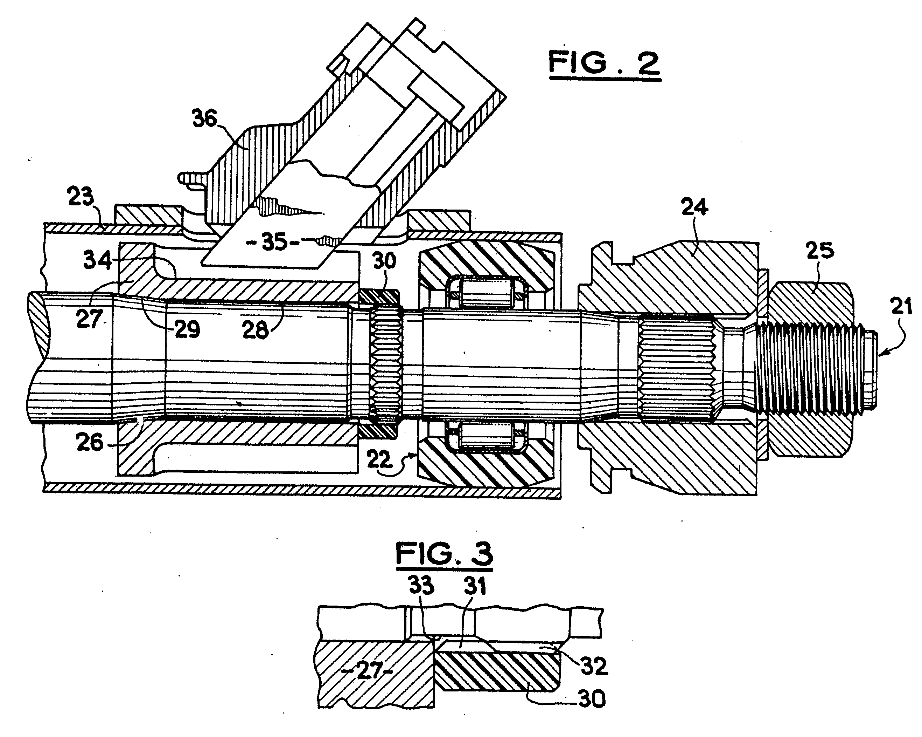

Dans la variante représentée aux Fig. 2 et 3, la partie supérieure d'un arbre de direction 21 tourillonne directement dans un roulement à aiguilles 22 emmanché dans un corps fixe de colonne de direction 23. Sur l'extrémité de cet arbre, un moyeu 24 de volant de direction est bloqué de façon classique à l'aide d'un écrou 25. L'arbre 21 comporte par ailleurs une surface tronconique 26.

Autour de l'arbre 21, et du côté du roulement 22 opposé au moyeu 24, est montée une bague 27 comportant un alésage 28 ajusté librement sur l'arbre 21 et une partie tronconique 29 qui coopère avec la partie tronconique 26 de l'arbre 21.

Les surfaces coniques 26, 29 sont serrées l'une sur l'autre par un manchon 30 emmanché à la presse, suivant un effort déterminé, sur l'arbre 21. Le manchon 30 comporte des cannelures intérieures 31 qui coopèrent avec des cannelures 32 correspondantes de l'arbre, mais la longueur du manchon 30 est supérieure à la longueur des cannelures 32, de sorte que la partie du manchon 30 située du côté de la bague 27 est placée au droit d'une gorge 33 de l'arbre 21. Le fond des cannelures 31 du manchon présente une légère conicité garantissant le maintien du manchon après son emmanchement sur les cannelures 32 de l'arbre 21.

Extérieurement, la bague 27 présente des saignées longitudinales 34 destinées à recevoir un pène 35 coulissant sous la commande d'une clé, non représentée dans un corps de verrou 36.

Cette variante présente les mêmes avantages que le premier exemple décrit. Elle présente notamment de l'intérêt lorsque les nécessités de l'implantation obligent à éloigner le dispositif antivol de l'extrémité supérieure de l'arbre de direction.

## Revendications

1. Dispositif antivol pour véhicule automobile, du type à blocage de la colonne de direction (15, 23), comprenant un verrou (13, 36) dont un pène peut venir en prise avec une bague (7, 27) entourant l'arbre de direction (1, 21) auquel elle est reliée par des moyens à limitation de couple, caractérisé en ce que les moyens à limitation de couple comprennent deux surfaces coniques complémentaires (3, 9; 26, 29) formées sur l'arbre de direction (1; 21) et sur la bague (7; 27), des moyens (6, 18; 30) étant prévus pour exercer entre ces surfaces un effort axial prédéterminé.

2. Dispositif suivant la revendication 1, caractérisé en ce que le cône selon lequel sont formées les surfaces coniques complémentaires est un "cône engageant".

3. Dispositif suivant la revendication 2, caractérisé en ce que les surfaces coniques complémentaires ont une conicité de l'ordre de 16 à 20% environ, correspondant à un angle au sommet du cône compris entre 8° et 11° environ.

4. Dispositif suivant la revendication 1, caractérisé en ce que l'effort axial est exercé par un écrou (18) serré sur l'extrémité filetée (6) de l'arbre de direction (1), et transmis par le moyeu (16) du volant.

5. Dispositif suivant la revendication 1, caractérisé en ce que l'effort axial est exercé par un manchon (30) emmanché à la presse sur l'arbre (21).

## Patentansprüche

1. Diebstahlsicherungsvorrichtung für Kraftfahrzeuge des die Lenksäule (15, 23) blockierenden Typs, welche ein Schloß (13, 36) mit einem Riegel aufweist, der mit einem Ring (7, 27) in Eingriff kommen kann, welcher die Lenkspindel (1, 21), mit welcher er über eine Drehmomentbegrenzungseinrichtung verbunden ist, umgibt, dadurch gekennzeichnet, daß die Drehmomentbegrenzungseinrichtung zwei auf der Lenkspindel (1; 21) und dem Ring (7; 27) ausgebildete komplementäre konische Flächen (3, 9; 26, 29) umfaßt, wobei eine Einrichtung (6, 18; 30) zur Ausübung einer bestimmten Axialkraft zwischen diesen Flächen vorgesehen ist.

2. Vorrichtung nach Anspruch 1, dadurch gekennzeichnet, daß der Konus, gemäß welchem die komplementären konischen Flächen ausgebildet sind, ein "verbindender Konus" ist.

3. Vorrichtung nach Anspruch 2, dadurch gekennzeichnet, daß die komplementären konischen Flächen eine Konizität der Größenordnung von ungefähr 16 bis 20%, entsprechend einem Scheitelwinkel des Konus zwischen ungefähr 8° und 11°, haben.

4. Vorrichtung nach Anspruch 1, dadurch gekennzeichnet, daß die Axialkraft durch eine auf dem mit einem Gewinde versehenen Ende (6) der Lenkspindel (1) verriegelte Mutter (18) ausgeübt und durch die Lenkradnabe (16) übertragen wird.

5. Vorrichtung nach Anspruch 1, dadurch gekennzeichnet, daß die Axialkraft durch eine auf die Spindel (21) aufgepreßte Muffe (30) ausgeübt wird.

## Claims

1. An anti-theft device for an automobile vehicle, of the type locking the steering column (15, 23), comprising a lock (13, 36) whose bolt is capable of engaging with a ring (7, 27) surrounding the steering shaft (1, 21) to which it is connected by torque-limiting means, characterized in that the torque-limiting means comprise two complementary conical surfaces (3, 9; 26, 29) formed on the steering shaft (1; 21) and on the ring (7; 27), means (6, 18; 30) being provided for exerting a predetermined axial force between these surfaces.

2. A device according to claim 1, characterized in that the cone according to which the complementary conical surfaces are formed is an "engaging cone".

3. A device according to claim 2, characterized in that the complementary conical surfaces have a taper of the order of about 16 to 20% corresponding to an included angle at the apex of the cone of between about 8° and 11°.

4. A device according to claim 1, characterized in that the axial force is exerted by a nut (18) tightened on the screwthreaded end (6) of the steering shaft (1) and transmitted through the hub (16) of the steering wheel.

5. A device according to claim 1, characterized in that the axial force is exerted by a sleeve (30) which is a press-fit on the shaft (21).

FIG. 1

FIG . 2

FIG. 3